# EUROPÄISCHE PATENTSCHRIFT

(11) **EP 1 455 207 B1**
(45) Veröffentlichungstag und Bekanntmachung des Hinweises auf die Patenterteilung: **23.11.2005**
(21) Anmeldenummer: 03010282.6
(22) Anmeldetag: 07.05.2003
(51) Int. Cl.: G02B 6/38, B60D 1/64

(54) **Lichtleiterkupplung**
Connector for light conductor
Connecteur pour transmission de lumiere

(30) Priorität: 07.03.2003 DE 10310148
(43) Veröffentlichungstag der Anmeldung: 08.09.2004
(73) Patentinhaber: era-contact GmbH, 75015 Bretten (DE)
(72) Erfinder: Meyer, Martin Wolfgang, 75217 Birkenfeld-Gräfenhausen (DE)
(74) Vertreter: Schaumburg, Thoenes, Thurn, Landskron

(56) Entgegenhaltungen:
- DE-A- 19 807 596
- GB-A- 381 354
- US-A- 4 284 311
- US-A- 4 964 690
- US-B1- 6 481 738

## Beschreibung

Die vorliegende Erfindung betrifft eine Lichtleiterkupplung, insbesondere zum Übertragen von optischen Signalen zwischen miteinander gekuppelten Fahrzeugteilen, mit einem ersten und einem zweiten Kupplungsteil, die miteinander kuppelbar sind und in denen jeweils ein lichtleitendes Element gehalten ist, von denen mindestens eines derart elastisch vorgespannt ist, dass die lichtleitenden Elemente mit ihren Stirnflächen aneinander gedrückt werden, wenn die Kupplungsteile miteinander gekuppelt sind, um eine Lichtübertragung von einem lichtleitenden Element auf das andere zu gestatten.

Eine derartige Lichtleiterkupplung ist beispielsweise aus DE 28 54 962 C2 bekannt, in der eine Mittelpufferkupplung für Schienenfahrzeuge beschrieben ist. Zu der Mittelpufferkupplung gehört eine Kabelkupplung, die unter anderem dazu dient, Impulse für die Steuerung des Brems- und Fahrstromes in einem Zugverband von einem Wagen auf den anderen zu übertragen. Die Kabelkupplung besteht aus zwei Kontaktträgern, von denen jeweils einer an jedem Wagen befestigt ist und in denen neben einer Vielzahl elektrischer Kontakte auch jeweils ein Lichtwellenleiter angeordnet ist. Von den Lichtwellenleitern ist einer derart elastisch vorgespannt, dass die beiden Lichtwellenleiter mit ihren Stirnflächen aneinander gedrückt werden, wenn die Kontaktträger beim Kuppeln der Wagen aufeinander zu bewegt werden. Über diese aneinandergedrückten Lichtwellenleiter können optische Signale von einem Wagen zum anderen übertragen werden.

Aus der DE 198 07 596 C2 ist eine Lichtwellenleitersteckverbindung der eingangs genannten Art bekannt, bei der nicht nur eines, sondern beide lichtleitende Elemente elastisch vorgespannt sind.

Wenn Lichtleiterkupplungen der eingangs genannten Art unter rauen Bedingungen verwendet werden, wie sie beispielsweise beim Übertragen von Signalen zwischen miteinander gekuppelten Fahrzeugteilen vorliegen, treten jedoch häufig Übertragungsfehler auf. Eine Ursache dafür liegt darin, dass die optischen Signale bei ihrer Übertragung von einem lichtleitenden Element auf das andere sowohl infolge eines Ver-satzes als auch infolge eines Verkippens der optischen Achsen der beiden lichtleitenden Elemente relativ zueinander stark gedämpft werden, was zu einer Verfälschung der optischen Signale führt. Eine derartige Verrückung und Verkippung der optischen Achsen der lichtleitenden Elemente lässt sich jedoch bei miteinander gekuppelten Fahrzeugteilen kaum vermeiden, da die beiden Kupplungsteile nicht starr miteinander verbunden sind und verhältnismässig stark mechanisch beansprucht werden. Weitere Ursachen für eine unzuverlässige Signalübertragung liegen in der Empfindlichkeit derartiger Lichtleiterkupplungen gegenüber Verschleiß und Verschmutzung, die im rauen Betrieb ebenfalls unvermeidlich sind.

Um diese Probleme zu umgehen, wurde in DE 29 22 937 C2 eine Kabelkupplung vorgeschlagen, in der die lichtleitenden Elemente nicht mit ihren Stirnflächen aneinander stoßen, sondern das Licht mit Hilfe von Linsensteckem durch die Luft von einem lichtleitenden Element auf das andere übertragen wird. Eine derartige Leitungskupplung ist jedoch relativ kompliziert und teuer und konnte nicht die Zuverlässigkeit bieten, die man sich von ihr versprochen hatte.

In Anbetracht der oben genannten Schwierigkeiten wurde in der DE 100 52 020 A1 vorgeschlagen, bei Anwendungen unter rauen Bedingungen auf eine herkömmliche optische Kupplung von Lichtleitern vollständig zu verzichten und stattdessen die in einem ersten Lichtwellenleiter geleiteten optischen Signale zunächst in elektrische Signale umzuwandeln, diese über eine herkömmliche Elektrokupplung zu übertragen, die übertragenen elektrischen Signale wiederum in optische Signale umzuwandeln und in einen zweiten Lichtwellenleiter einzuspeisen. Dabei verzichtet man allerdings auf die Vorteile einer Lichtleiterkupplung, nämlich die einer höheren Übertragungsbandbreite und einer geringeren Anfälligkeit gegenüber elektrischen Störfeldern, die insbesondere immer dann auftreten, wenn in unmittelbarer Nachbarschaft auch hohe Ströme übertragen werden, wie dies beispielsweise bei Kabelkupplungen für Schienenfahrzeuge oft der Fall ist.

Der Erfindung liegt die Aufgabe zugrunde, eine Lichtleiterkupplung anzugeben, die die einfach im Aufbau ist und eine störungsunempfindliche Signalübertragung gestattet.

Diese Aufgabe wird bei einer Lichtleiterkupplung der eingangs genannten Art dadurch gelöst, dass die Stirnfläche des einen lichtleitenden Elementes sphärisch konkav und die Stirnfläche des anderen lichtleitenden Elementes mit gleichem Krümmungsradius sphärisch konvex ausgebildet ist.

Im gekuppelten Zustand liegt die konvexe Stirnfläche des einen Kupplungsteiles passgenau in der konkaven Stirnfläche des anderen Kupplungsteiles, und zwar ohne einen Luftspalt zwischen den Stirnflächen, der eine Dämpfung der optischen Signale zur Folge hätte.

Unter der aus der Vorspannung des einen oder beider lichtleitender Elemente resultierenden Andruckkraft wird die konvexe Stirnfläche in die Aushöhlung der konkaven Stirnfläche gedrückt, wodurch die beiden Kupplungsteile automatisch miteinander zentriert werden. Dadurch wird bei der erfindungsgemäßen Lichtleiterkupplung ein Versatz der optischen Achsen der lichtleitenden Elemente vermieden, der wie oben beschrieben bei herkömmlichen Lichtleiterkupplungen ebenfalls zu einer Dämpfung der optischen Signale führt.

Darüber hinaus gestatten die sphärischen Stirnflächen eine Verkippung der optischen Achsen der lichtleitenden Elemente gegeneinander, ohne dass die Stirnflächen voneinander abgehoben werden. Bei einer derartigen Verkippung gleitet nämlich die sphärisch konvexe Stirnfläche an der sphärisch konkaven Stirnfläche entlang wie ein Gelenkkopf in einer Gelenkpfanne, ohne dass sich ein Luftspalt zwischen den Stirnflächen ergibt. Darin besteht ein großer Vorteil gegenüber herkömmlichen Lichtleiterkupplungen mit ebenen Stirnflächen, zwischen denen sich bei einer Verkippung der Kupplungsteile relativ zueinander unweigerlich ein Luftspalt bildet, der zu einer unzulässigen Dämpfung der übertragenen Signale führt.

Die Möglichkeit einer geringen Dämpfung bei Verkippung der Kupplungsteile gegeneinander ist insbesondere von großer Bedeutung, wenn die Lichtleiterkupplung zum Übertragen von optischen Signalen zwischen miteinander gekuppelten Fahrzeugteilen, beispielsweise Schienenfahrzeugen, verwendet wird. Obwohl bei herkömmlichen Leitungskupplungen für Schienenfahrzeuge versucht wird, die Kupplungsteile von Signalkupplungen und Elektrokupplungen linear zu führen, d.h. ein Verkippen der Kupplungsteile gegeneinander zu verhindern, gelingt dies in der Praxis infolge der hohen mechanischen Belastungen nicht zuverlässig, was dann zu einer übermäßigen Dämpfung der übertragenen optischen Signale führt. Bei der erfindungsgemäßen Lichtleiterkupplung kann auf eine Linearführung im Prinzip völlig verzichtet werden, weil selbst relativ große Verkippungen der Kupplungsteile gegeneinander zu einer tolerierbaren Dämpfung des Signals führen. Die erfindungsgemäße Lichtleiterkupplung ist also zu einem gewissen Grade "knickbar".

Vorzugsweise bestehen die lichtleitenden Elemente jeweils aus einer lichtundurchlässigen Hülse und einem darin aufgenommenen transparenten Kern. Wenn die Kupplungsteile gekuppelt sind, bilden die lichtundurchlässigen Hülsen einen von Tageslicht abgeschirmten Lichttunnel.

Die sphärische Stirnfläche des transparenten Kernes wird jeweils im Hülsenende stufenlos fortgesetzt. Damit auch beim Verkippen der lichtleitenden Elemente relativ zueinander kein Tageslicht in den transparenten Kern einfallen kann, darf die Wanddicke der Hülse im Bereich der Stirnflächen nicht zu gering sein. Vorteilhafterweise beträgt sie mindestens 1/10, vorzugsweise mindestens 1/5 des Krümmungsradius der Stirnfläche.

Die bisher beschriebene Lichtleiterkupplung kann auf herkömmliche Weise und mit den beschriebenen Vorteilen als passives Kopplungselement zwischen zwei Lichtwellenteitern verwendet werden. Beispielsweise kann ein optisches Signal über einen ersten Lichtwellenleiter über eine gewisse Strecke zum ersten Kupplungsteil geleitet werden und dort in dessen lichtleitendes Element eingespeist werden. Das optische Signal wird dann durch die Stirnflächen der beiden lichtleitenden Elemente auf das lichtleitende Element des zweiten Kupplungsteiles übertragen, von diesem in den zweiten Lichtwellenleiter eingespeist und darin über eine weitere Strecke geleitet.

Aufgrund ihres einfachen Aufbaus und ihren zuverlässigen Kupplungseigenschaften eignet sich die beschriebene Lichtleiterkupplung aber auch für einen breiteren und vielseitigeren Einsatz an. Eine große Vielseitigkeit wird erreicht, wenn die Lichtleiterkupplung mit aktiven Elementen zur Signalaufbereitung oder zum Erzeugen neuer Signale ausgestattet ist.

In einer bevorzugten Weiterbildung beinhaltet das erste Kupplungsteil daher eine Sendeeinrichtung, die aus elektrischen Signalen optische Signale erzeugt und diese in das lichtleitende Element des ersten Kupplungsteiles einspeist. Zusätzlich oder alternativ beinhaltet das zweite Kupplungsteil eine Empfangseinrichtung, die aus auf das lichtleitende Element des zweiten Kupplungsteiles übertragenen optischen Signalen elektrische Signale erzeugt.

Darüber hinaus kann das erste Kupplungsteil einen Mikroprozessor beinhalten, der die elektrischen Signale für die Sendeeinrichtung bereitstellt. Auch das zweite Kupplungsteil kann einen Mikroprozessor beinhalten, der das in der Empfangsvorrichtung erzeugte elektrische Signal verarbeitet. Bei dieser Verarbeitung im Mikroprozessor des zweiten Kupplungsteils kann beispielsweise geprüft werden, ob die Signale vollständig übertragen wurden. Falls dies nicht der Fall sein sollte, kann der Mikroprozessor des ersten Kupplungsteiles beauftragt werden, diese Signale erneut zu senden. Der Mikroprozessor des ersten Kupplungsteiles kann beispielsweise der Sendeeinrichtung die Stärke des darin zu erzeugenden optischen Signales vorschreiben, die eine mögliche Dämpfung der optischen Signalübertragung infolge von Verschmutzung oder Betauung der Stirnflächen der lichtleitenden Elemente kompensiert.

In einer vorteilhaften Weiterbildung ist der Mikroprozessor des ersten Kupplungsteiles programmiert, um mehrere individuelle Signale in elektrischen Multiplexsignalen zu vereinen, und der Mikroprozessor des zweiten Kupplungsteiles programmiert, um elektrische Multiplexsignale in individuelle Signale zu zerlegen. Dann können mehrere unterschiedliche Signale gleichzeitig über die Lichtleiterkupplung übertragen werden, wodurch Lichtleiterkupplungen eingespart werden können.

Vorzugsweise hat das erste und/oder das zweite Kupplungsteil ein Gehäuse, an dessen einem axialen Ende ein hülsenartiger Abschnitt ausgebildet ist, in dem das lichtieitende Element axial verschiebbar gelagert und in Richtung auf dieses eine axiale Ende elastisch vorgespannt ist, und an dessen anderem Ende ein Anschlussbolzen ausgebildet ist, der zum Einsetzen in einen Kontaktträger bestimmt ist. Der Anschlussbolzen besteht vorzugsweise aus zwei gegeneinander isolierten Abschnitten, von denen der eine mit einem Massepotential und der andere mit einer elektrischen Signalleitung verbunden ist, wenn der Anschlussbolzen in den Kontaktträger eingesetzt ist.

Weitere Vorteile und Merkmale der Erfindung ergeben sich aus der folgenden Beschreibung, in der die Lichtleiterkupplung anhand eines Ausführungsbeispieles näher erläutert wird. Darin zeigen:
- Fig.1: eine Schnittdarstellung eines ersten Kupplungsteiles einer Lichtleiterkupplung in Explosionsdarstellung (oben) und im zusammengesetzten Zustand (unten),
- Fig.2: eine Schnittdarstellung eines zweiten Kupplungsteiles einer Lichtleiterkupplung in Explosionsdarstellung (oben) und im zusammengesetzten Zustand (unten),
- Fig.3: eine Schnittdarstellung der Kupplungsteile von Figuren 1 und 2 im gekuppelten Zustand,
- Fig.4: die gekuppelten Kupplungsteile von Figur 3, deren Abstand in Richtung der optischen Achse verkürzt ist,
- Fig.5: die gekuppelten Kupplungsteile von Figur 3, deren optische Achsen gegeneinander verkippt sind,
- Fig.6: einen Längsschnitt durch das Gehäuse des ersten Kupplungsteiles,
- Fig.7: eine Querschnittsansicht des Gehäuses des ersten Kupplungsteiles,
- Fig.8: eine Querschnittsansicht einer alternativen Ausführungsform des Gehäuses des ersten Kupplungsteiles,
- Fig.9: eine Funktionsskizze einer Sendeeinrichtung des ersten Kupplungsteiles,
- Fig.10: eine Funktionsskizze einer Empfangseinrichtung des zweiten Kupplungsteiles und
- Fig.11: eine Schnittansicht eines Abschnitts einer Leitungskupplung für Schienenfahrzeuge mit zwei Kontaktträgern, in die jeweils ein Kupplungsteil der Lichtleiterkupplung eingesetzt ist.

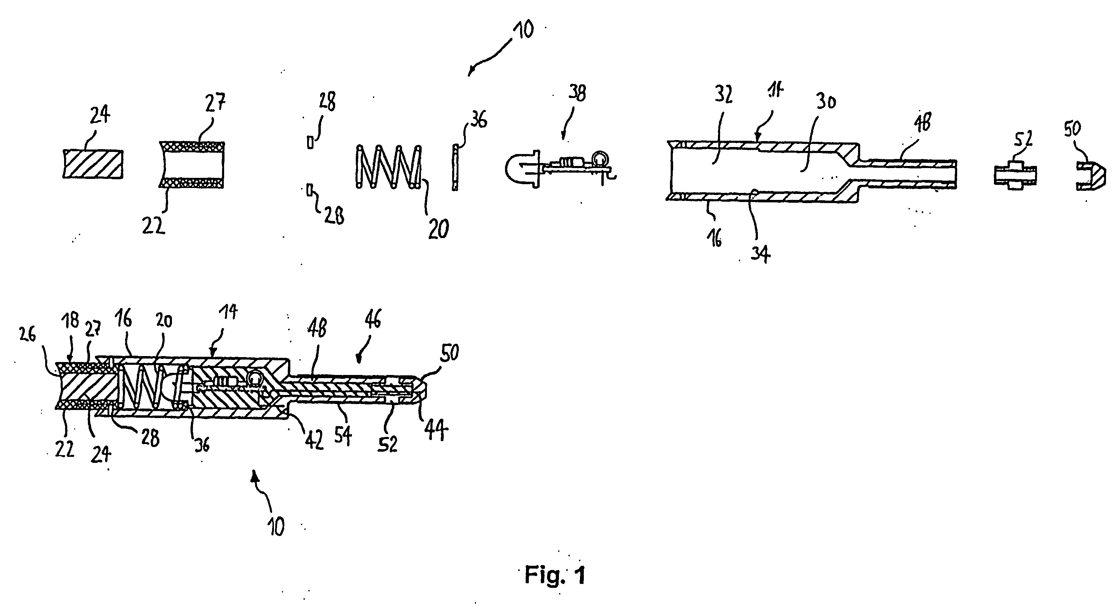

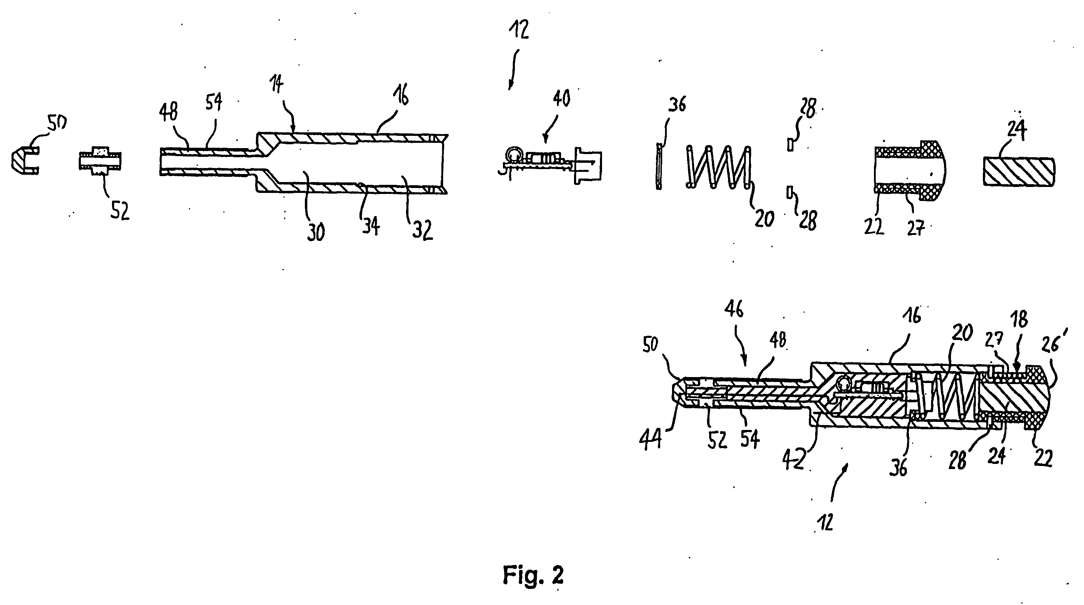

In Figur 1 ist eine Längsschnittsansicht des ersten Kupplungsteiles 10 einer Lichtleiterkupplung nach einer Weiterbildung der vorliegenden Erfindung in Explosionsdarstellung (oben) und im zusammengesetzten Zustand (unten) gezeigt. In Figur 2 ist eine Längsschnittsdarstellung des zweiten Kupplungsteiles 12 der gleichen Lichtleiterkupplung in Explosionsdarstellung (oben) und im zusammengesetzten Zustand (unten) gezeigt. Da das erste und das zweite Kupplungsteil 10 bzw. 12 in vielen Merkmalen identisch sind, werden sie im folgenden gemeinsam beschrieben, wobei gleichartige Teile durch die gleichen Bezugszeichen gekennzeichnet werden.

Die Kupplungsteile 10 und 12 haben jeweils ein Metallgehäuse 14 mit einem hülsenartigen Abschnitt 16, in dem ein lichtleitendes Element 18 axial verschiebbar gelagert ist. Die lichtleitenden Elemente 18 können gegen die Vorspannkraft einer Feder 20 in den hülsenartigen Abschnitt 16 des jeweiligen Gehäuses 14 gedrückt werden. Anstatt mit der Feder 20 kann das lichtleitende Element 18 auch durch im hülsenartigen Abschnitt eingeschlossenes Gas pneumatisch vorgespannt werden. Die lichtleitenden Elemente 18 bestehen jeweils aus einer lichtundurchlässigen Hülse 22 und einem darin aufgenommenen transparenten Kern 24.

Das lichtleitende Element 18 des ersten Kupplungsteils hat eine dem hülsenartigen Gehäuseabschnitt 16 abgewandte sphärisch konkave Stirnfläche 26 (Figur 1) und das lichtleitende Element 18 des zweiten Kupplungsteiles 12 eine sphärisch konvexe Stirnfläche 26' (Figur 2), deren Krümmungsradius mit demjenigen der sphärisch konkaven Stirnfläche 26 übereinstimmt. Die sphärisch konkave Stirnfläche 26 und die sphärisch konvexe Stirnfläche sind nicht nur im transparenten Kern 24 ausgebildet, sondern werden im axialen Ende der jeweiligen Hülse 22 des lichtleitenden Elementes 18 stetig fortgesetzt.

In den Hülsen 22 sind Führungsnuten 27 ausgebildet, in die Führungsbolzen 28 eingreifen. Die Verschiebungsbewegung der lichtleitenden Elemente 18 wird dadurch begrenzt, dass eines der Enden der Führungsnut 27 am Führungsbolzen 28 anstößt.

Der Innenraum des hülsenartigen Gehäuseabschnittes 16 besteht aus zwei zylindrischen Abschnitten, einem innen liegenden Abschnitt 30 und einem weiter außen liegenden Abschnitt 32, dessen Durchmesser größer ist als der des innen liegenden Abschnittes 30. Zwischen den zylindrischen Innenraumabschnitten 30 und 32 ist ein Absatz 34 in der Gehäuseinnenwand ausgebildet. Im äußeren Innenraumabschnitt 32 befinden sich das lichtleitende Element 18 und die Feder 20, die sich mit einem Ende am lichtleitenden Element 18, mit dem anderen Ende an einem Metallring 36 abstützt, der seinerseits am Absatz 34 aufliegt.

Im inneren Innenraumabschnitt 30 befindet sich beim ersten Kupplungsteil 10 eine Sendeeinrichtung 38 (Figur 1) und beim zweiten Kupplungsteil eine Empfangseinrichtung 40 (Figur 2). Sowohl die Sendeeinrichtung 38 als auch die Empfangseinrichtung 40 haben einen Masseanschluss 42, der mit dem hülsenartigen Abschnitt 16 des Gehäuses 14 verlötet ist, und einen Signalanschluss 44.

Das Gehäuse 14 hat an seinem dem lichtleitenden Element 18 abgewandten Ende einen hohlen Anschlussbolzen 46 mit einem Massenanschlussabschnitt 48, einem Signalanschlussabschnitt 50 und einem dazwischen liegenden Isolierungsstück 52, das die Abschnitte 48 und 50 voneinander elektrisch isoliert. Der Signalanschluss 44 ist durch den Hohlraum im Anschlussbolzen 46 geführt und mit dem Signalanschlussstück 50 verlötet. Der innere Innenraumabschnitt 30 und der Hohlraum des Anschlussbolzens 46 sind mit Vergussmasse ausgegossen, die in den Figuren 1 und 2 durch Schraffierung dargestellt ist.

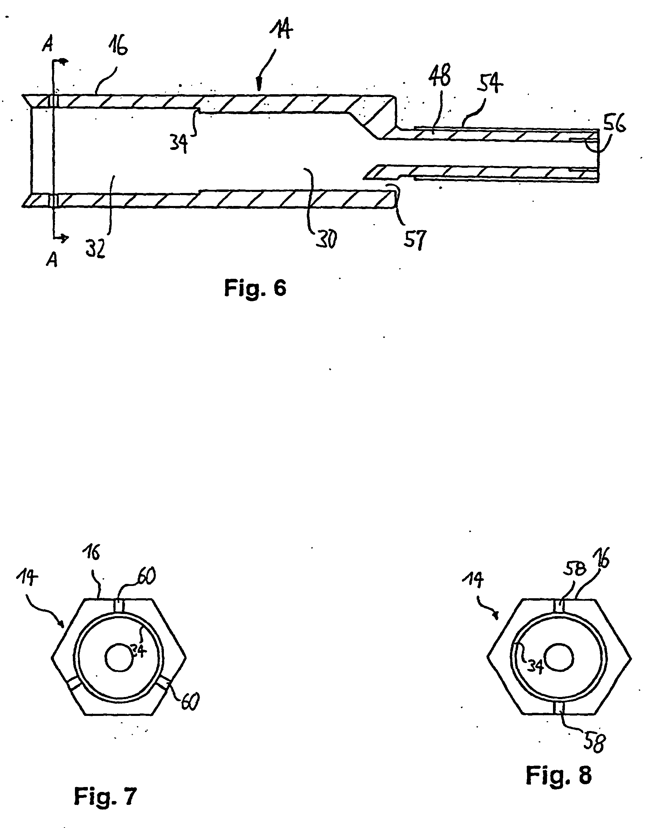

In Figur 6 ist eine vergrößerte Schnittdarstellung des Gehäuses 14 des ersten Kupplungsteiles 10 gezeigt. Wie in Figur 6 zu sehen, ist am MassenanschlussAbschnitt 48 des Anschlussbolzens 46 ein Außengewinde 54 ausgebildet, mit dem das erste Kupplungsteil 10 in eine auf Massepotential befindliche Fassung in einem Kontaktträger einschraubbar ist. An der Innenseite des Masseanschlussabschnittes 48 befindet sich ein Innengewinde 56, in das das Isolierungsstück 52 einschraubbar ist (siehe Figur 1). In der Schnittdarstellung von Figur 6 ist ferner eine Bohrung 57 gezeigt, in der der Massenanschluss 40 der Sendeeinrichtung 38 verlötet wird.

Figur 8 zeigt einen Querschnitt durch das Gehäuse 14 des ersten Kupplungsteiles 10 entlang der Linie A-A von Figur 6. Wie darin zu erkennen, hat der hülsenartige Abschnitt 16 des Gehäuses 14 einen sechseckigen Außenquerschnitt, an den ein Werkzeug ansetzbar ist, um das Kupplungsteil 10 mit seinem Gewinde 54 in eine Fassung zu schrauben. Der hülsenartige Abschnitt 16 des Gehäuses 14 hat zwei Aufnahmen 58 für die Führungsbolzen 28, die bereits in den Figuren 1 und 2 beschrieben wurden. Anstelle von zwei Aufnahmen 58 können auch drei um jeweils 120° versetzte Aufnahmen 60 vorgesehen sein, wie dies in Figur 7 gezeigt ist. In dem Fall hat die lichtundurchlässige Hülse 22 drei entsprechend angeordnete Führungsnuten 27.

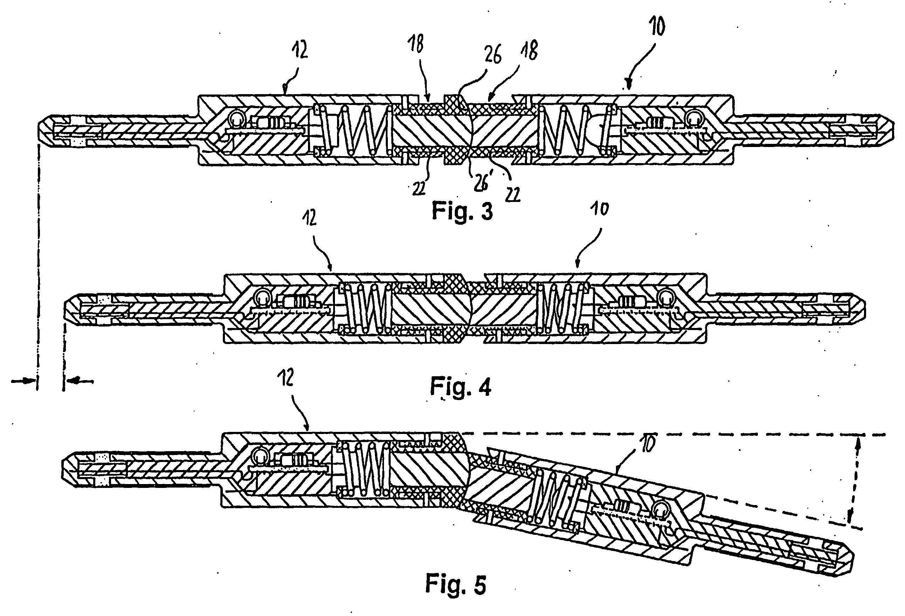

In Figur 3 sind das erste Kupplungsteil 10 und das zweite Kupplungsteil 12 im gekuppelten Zustand gezeigt. Dabei werden die Stirnflächen 26 bzw. 26' des jeweiligen lichtleitenden Elementes 18 aneinander gepresst, so dass optische Signale, die in den transparenten Kern 24 des lichtleitenden Elementes 18 des ersten Kupplungsteils 10 eingespeist werden, durch die Stirnflächen 26 und 26' in den transparenten Kern 22 des lichtleitenden Elementes 18 des zweiten Kupplungsteiles 12 übertragen werden. Dabei bilden die lichtundurchlässigen Hülsen 22 der lichtleitenden Elemente 18 einen von Tageslicht abgeschirmten Lichttunnel.

Da die beiden lichtleitenden Elemente 18 jeweils verschiebbar in dem Gehäuse 14 der Kupplungsteile 10 bzw. 12 gelagert sind, können die Kupplungsteile etwas aufeinander zu und voneinander weg bewegt werden, ohne dass die Funktion der Lichtleiterkupplung beinträchtigt würde. In Figur 4 sind beispielsweise die Kupplungsteile 10 und 12 von Figur 3 etwas aufeinander zu bewegt, ohne dass sich die Lage der lichtleitenden Elemente 18 zueinander geändert hätte, so dass auch die Lichtübertragung unbeeinflusst bleibt. Die gezeigte Lichtleiterkupplung gestattet also eine gewisse Toleranz in der relativen Anordnung der beiden Kupplungsteile 10 und 12 in Kupplungsrichtung, d.h. entlang der optischen Achsen der lichtleitenden Elemente 18, die durch die Mittelachse derselben gebildet wird. Ferner wirken die mit Federdruck belasteten Stirnflächen 26 und 26' einem Versatz der optischen Achsen der lichtleitenden Elemente 18 entgegen, d.h. sie helfen, die beiden Kupplungsteile aneinander auszurichten und die ausgerichtete Lage beizubehalten.

In Figur 5 sind ebenfalls die beiden Kupplungsteile 10 und 12 im gekuppelten Zustand gezeigt. Anders als in den Figuren 3 und 4 sind hier die Kupplungsteile 10 und 12 jedoch nicht auf einer Linie angeordnet, sondern gegeneinander verkippt. Das bedeutet, dass die optischen Achsen der lichtleitenden Elemente 18, die jeweils mit der Symmetrieachse des transparenten Kernes 24 zusammenfallen, in einem Winkel zueinander stehen. Aufgrund ihrer sphärischen Ge-stalt liegen die Stirnflächen 26 und 26' dennoch lückenlos aneinander an, so dass sich die Dämpfung des Lichtes beim Durchtritt durch die Stirnflächen 26 und 26' in Grenzen hält. Die Lichtleiterkupplung ist also zu einem gewissen Grad knickbar, ohne dass ihre Funktion beeinträchtigt würde. Dies ist ein großer Vorteil gegenüber üblicherweise verwendeten ebenen Stirnflächen, die bei einer derartigen Verkippung voneinander abgehoben würden, so dass die Lichtübertragung von einem Kupplungsteil auf das andere stark gedämpft würde.

In Figur 5 ist die Lichtleiterkupplung in ihrer maximal geknickten Lage gezeigt, in der die Kupplungsteile um 11° gegeneinander verkippt sind. Bei einer weiteren Verkippung würde Tageslicht in den Lichttunnel eintreten und das optische Signal verfälschen. Der Grenzwinkel, bei dem Tageslicht in den Lichttunnel eindringen würde, hängt vom Verhältnis der Wanddicke der lichtundurchlässigen Hülsen im Bereich der Stirnflächen 26 bzw. 26' zum Krümmungsradius der Stirnflächen 26, 26' ab. Im gezeigten Ausführungsbeispiel ist die Wanddicke der lichtundurchlässigen Hülse 22 des ersten Kupplungsteiles im Bereich der Stirnfläche 26 geringer als die der lichtundurchlässigen Hülse 22 des zweiten Kupplungsteiles 12, und somit für die Bestimmung des Grenzwinkels maßgeblich. Sie beträgt etwa 1/5 des Krümmungsradius der sphärischen Stirnflächen 26 und 26'.

Es wird betont, dass obwohl die in den Figuren 1 bis 5 gezeigte Lichtleiterkupplung eine Sendeeinrichtung 38 und eine Empfangseinrichtung 40 beinhaltet, die bisher beschriebenen Merkmale, insbesondere die sphärische Ausgestaltung der Stirnflächen 26 und 26' auch für Lichtleiterkupplungen im herkömmlichen Sinne gedacht sind, in denen keine derartigen aktiven Elemente vorgesehen sind. In diesem Fall würde Licht von einem Lichtwellenleiter in das lichtleitende Element 18 des ersten Kupplungsteiles 10 eingespeist, durch dessen Stirnfläche 26 und die Stirnfläche 26' des lichtleitenden Elementes 18 des zweiten Kupplungsteils 12 übertragen und in einem mit dem lichtleitenden Element 18 des zweiten Kupplungsteils verbundenen Lichtwellenleiter weiter geleitet. Die Sende- und Empfangseinrichtungen 38 bzw. 40 stellen lediglich eine vorteilhafte Weiterbildung der Erfindung dar, die im folgenden beschrieben wird.

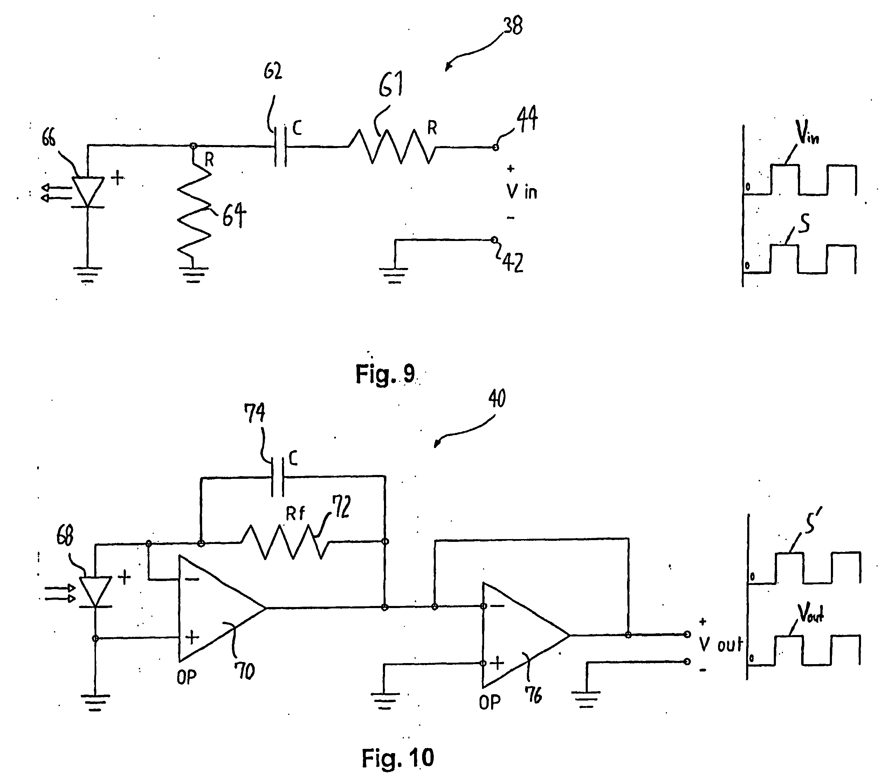

In Figur 9 ist eine Funktionsskizze der Sendeeinrichtung 38 gezeigt. Wie dieser zu entnehmen, wird eine zwischen dem Masseanschluss 42 und dem Signalanschluss 44 anliegende Eingangsspannung Vᵢₙ über einen Widerstand 61 skaliert und über einen aus einem Kondensator 62 und einem Widerstand 64 bestehenden Hochpass an eine Leuchtdiode 66 angelegt, die der anliegenden Spannung entsprechend Licht emittiert. Der Zusammenhang zwischen der anliegenden Spannung Vᵢₙ und der Strahlungsleistung S der Leuchtdiode 66 ist im rechten Teil von Figur 9 in einem Diagramm schematisch dargestellt, dessen Abszisse die Zeit anzeigt und dessen Ordinate die Eingangsspannung Vᵢₙ und die Strahlungsleistung S in nicht bestimmten Einheiten angibt.

In Figur 10 ist eine Funktionsskizze der Empfangseinrichtung 40 gezeigt. Die Empfangseinrichtung 40 beinhaltet eine Fotodiode 68, die in Abhängigkeit von der Intensität einfallenden Lichts eine Spannung erzeugt. Diese wird in einem ersten Schaltungsabschnitt mit Hilfe eines Operationsverstärkers 70, eines Widerstandes 72 und eines Kondensators 74 geeignet verstärkt und mit Hilfe eines weiteren Operationsverstärkers 76 zu einer Ausgabespannung Vₒᵤₜ invertiert. Der Zusammenhang der empfangenen Strahlungsleistung S' (die multipliziert mit einem Dämpfungsfaktor der von der LED 66 emittierten Strahlungsleistung entspricht) und dem Ausgabesignal Vₒᵤₜ der Empfangseinrichtung 40 ist im rechten Teil von Figur 10 in einem Diagramm schematisch dargestellt, dessen Abszisse wiederum die Zeit und dessen Ordinate die empfangene Strahlungsleistung S' und die Ausgangsspannung Vₒᵤₜ in unbestimmten Einheiten zeigt.

Die Sendeeinrichtung 38 und die Empfangseinrichtung 40 sind so ausgebildet, dass das Ausgabesignal Vₒᵤₜ der Empfangseinrichtung 40 trotz einer möglichen Dämpfung des übertragenen optischen Signales der Eingangsspannung Vᵢₙ entspricht. Selbst wenn also das zwischen den Kupplungsteilen 10 und 12 übertragene optische Signal einer gewissen Dämpfung unterworfen ist, ist das effektiv übertragene elektrische Signal Vₒᵤₜ gegenüber dem Ursprungssignal Vᵢₙ nicht gedämpft.

Bei dem elektrischen Eingangssignal Vᵢₙ kann es sich beispielsweise um ein elektrisches Hochfrequenzsignal handeln, das innerhalb zweier Fahrzeugteile Ober ein Koaxialkabel geleitet wird und nur zum Passieren der Lichtlefterkupplung mit Hilfe der Sendeeinrichtung 38 in ein optisches Signal umgewandelt wird. Die weitergebildete Lichtleiterkupplung mit den aktiven Elementen 38 und 40 findet aber auch Verwendung, wenn in den Fahrzeugteilen bereits optische Signale durch Lichtwellenleiter übertragen werden. Diese werden dann im ersten Kupplungsteil zunächst in ein elektrisches Signal umgewandelt, das dann an die Sendeeinrichtung 38 angelegt wird. Das Ausgangssignal Vₒᵤₜ der Empfangseinrichtung 40 wird dann im zweiten Kupplungsteil wiederum in ein optisches Signal umgewandelt und in einen weiteren Lichtwellenleiter eingespeist.

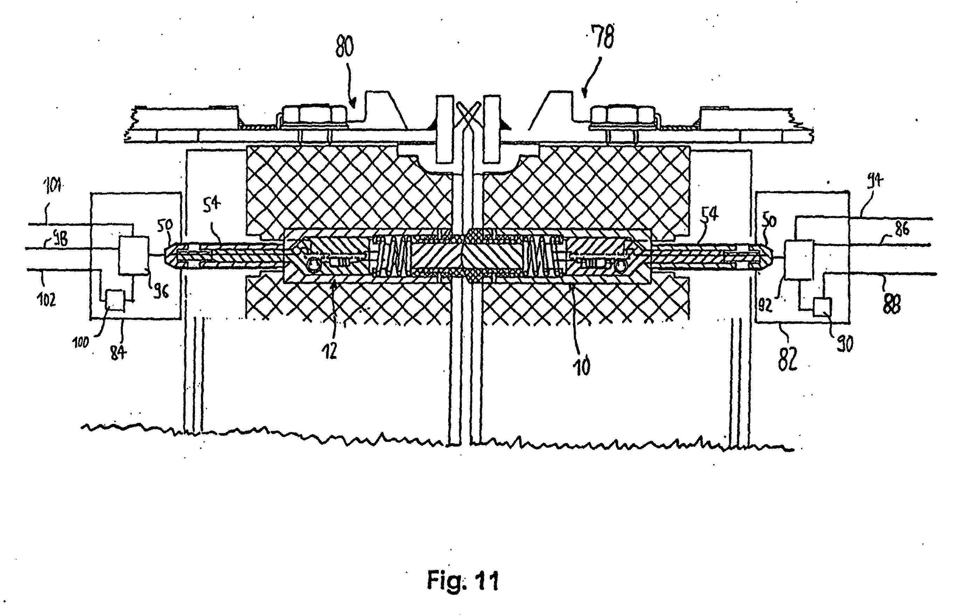

In Figur 11 ist ein Abschnitt einer Leitungskupplung zur Verwendung in Kombination mit einer automatischen Schienenfahrzeugskupplung in Schnittdarstellung gezeigt. Eine automatische Kupplung wird verwendet, wenn die Zugteile häufiger gekuppelt und entkuppelt werden müssen. Dann ist die zugehörige Leitungskupplung so ausgebildet, dass ihre elektrischen und optischen Kontakte beim automatischen Kuppeln der Zugteile ebenfalls automatisch mitgekuppelt werden.

Die Leitungskupplung beinhaltet zwei Kontaktträger 78 und 80, in denen neben einer Reihe elektrischer Kontakte (nicht gezeigt) auch die oben beschriebenen Kupplungsteile 10 und 12 der Lichtleiterkupplung eingesetzt sind. Die Kupplungsteile 10 und 12 sind mit dem Gewinde 54 des Anschlussbolzens stirnseitig in die Kontaktträger 78 bzw. 80 eingeschraubt, wodurch das Gewinde 54 auf Massepotential gelegt wird. Gleichzeitig kommt der Signalkontaktabschnitt 50 des ersten Kupplungsteiles 10 mit einer schematisch dargestellten ersten Signalverarbeitungseinheit 82 und der Signalanschlussabschnitt 50 des zweiten Kupplungsteiles 12 mit einer schematisch dargestellten zweiten Signalverarbeitungseinheit 84 elektrisch in Kontakt.

Im gezeigten Ausführungsbeispiel werden der ersten Signalverarbeitungseinheit 82 über ein Koaxialkabel 86 elektrische Signale und über einen Lichtwellenleiter 88 optische Signale zugeführt. Die optischen Signale 88 werden in einer Wandlereinheit 90 in elektrische Signale umgewandelt und zusammen mit den elektrischen Signalen aus der elektrischen Leitung 86 einer Steuerungseinheit 92 zugeführt. In der Steuerungseinheit 92 werden die beiden eingehenden elektrischen Signale zu einem Multiplexsignal verarbeitet, das auf den Signalanschluss 50 des ersten Kupplungsteiles übertragen wird. Dazu hat die Steuerungseinheit 92 einen Mikroprozessor (nicht gezeigt), bei dem es sich um einen Industrie-PC oder ein sogenanntes Field Programmable Gate Array (FPGA) handelt.

Die Steuerungseinheit 92 hat ferner einen Dateneingang 94, über den ihr weitere Informationen zur Signalverarbeitung zugeführt werden. Beispielsweise kann über die Datenleitung 94 signalisiert werden, dass bereits übertragene Signale unvollständig angekommen sind und erneut zu senden sind.

Die Umwandlung der elektrischen Multiplexsignale in optische Signale durch die Sendeeinrichtung 38 und deren Übertragung vom ersten Kupplungsteil 10 auf das zweite Kupplungsteil 12 erfolgen wie oben beschrieben. Vom Signalanschluss 50 des zweiten Kupplungsteiles 12 gelangen die in der Empfangseinrichtung 40 erzeugten elektrischen Signale in eine Steuerungseinheit 96 der zweiten Signalverarbeitungseinheit 84. In der Steuerungseinheit 96 werden die Multiplexsignale in individuelle Signale zerlegt. Die ursprünglich über die elektrische Leitung 86 eingegangenen Signale werden über eine elektrische Leitung 98 weitergeleitet. Die ursprünglich über den Lichtwellenleiter 88 eingegangenen Signale werden in einer Wandlereinheit 100 in optische Signale umgewandelt und in einen Lichtwellenleiter 102 eingespeist.

Über eine weitere Datenleitung 104 können Signale von der Steuerungseinheit 96 weitergeleitet werden, beispielsweise Fehlersignale, wenn Signale fehlerhaft empfangen wurden. Die Steuerungseinheit 96 enthält ebenfalls einen Industrie-PC oder ein FPGA (nicht gezeigt).

Die Signalverarbeitungseinheiten 82 und 84, können auch im Gehäuse 14 der KuppJungsteile untergebracht werden. Ferner können die Signalverarbeitungseinheiten 82 und 84 jeweils mit einem sendefähigen Kupplungsteil (ähnlich dem ersten Kupplungsteil 10) und einem empfangsfähigen Kupplungsteil (ähnlich dem zweiten Kupplungsteil 12) verbunden sein. Dann können Signale von beiden Seiten der Kupplung auf die jeweils andere Seite übertragen werden und die Signalverarbeitungseinheiten 82 und 84 können in beide Richtungen miteinander kommunizieren.

Die Kupplungsteile 10 und 12 können allerdings nicht nur wie in Fig. 11 gezeigt in speziellen Kontaktträgern, sondern auch direkt in den Kupplungsköpfen einer mechanischen Schienenfahrzeugskupplung, beispielsweise einer automatischen Mittelpufferkupplung angeordnet sein (nicht gezeigt). Die oben beschriebene Unempfindlichkeit der optischen Signalkupplung gegenüber mechanischen Toleranzen macht diese Anordnung möglich, die bei herkömmlichen optischen Signalkupplungen nicht funktionieren würde. Dadurch kann in manchen Fällen eine separate Leitungskupplung eingespart werden.

### Bezugszeichenliste

- 10: erstes Kupplungsteil
- 12: zweites Kupplungsteil
- 14: Gehäuse
- 16: hülsenartiger Gehäuseabschnitt
- 18: lichtleitendes Element
- 20: Feder
- 22: lichtundurchlässige Hülse
- 24: transparenter Kern
- 26, 26': sphärische Stirnfläche
- 27: Führungsnut
- 28: Führungsbolzen
- 30: innerer Innenraumabschnitt
- 32: äußerer Innenraumabschnitt
- 34: Absatz
- 36: Metallring
- 38: Sendeeinheit
- 40: Empfangseinheit
- 42: Masseanschluss
- 44: Signalanschluss
- 46: Anschlussbolzen
- 48: Masseanschlussabschnitt
- 50: Signalanschlussabschnitt
- 52: Isolierungsstück
- 54: Außengewinde
- 56: Innengewinde
- 57: Bohrung
- 58: Führungsbolzenaufnahme
- 60: Führungsbolzenaufnahme
- 62: Kondensator
- 64: Widerstand
- 66: LED
- 68: Photodiode
- 70: Operationsverstärker
- 72: Widerstand
- 74: Kondensator
- 76: Operationsverstärker
- 78: Kontaktträger
- 80: Kontaktträger
- 82: Signalverarbeitungseinheit
- 84: Signalverarbeitungseinheit
- 86: elektrische Signalleitung
- 88: Lichtwellenleiter
- 90: Signalwandler
- 92: Steuerungseinheit
- 94: Datenleitung
- 96: Steuerungseinheit
- 98: elektrische Signalleitung
- 100: Signalwandler
- 102: Lichtwellenleiter
- 104: Datenleitung

## Patentansprüche

1. Lichtleiterkupplung, insbesondere zum Übertragen von optischen Signalen zwischen miteinander gekuppelten Fahrzeugteilen, mit einem ersten und einem zweiten Kupplungsteil (10, 12), die miteinander kuppelbar sind und in denen jeweils ein lichtleitendes Element (18) gehalten ist, von denen mindestens eines derart elastisch vorgespannt ist, dass die lichtleitenden Elemente (18) mit ihren Stirnflächen (26, 26') aneinander gedrückt wehrden, wenn die Kupplungsteile (10, 12) miteinander gekuppelt sind, um eine Lichtübertragung von einem lichtleitenden Element (18) auf das andere zu gestatten, **dadurch gekennzeichnet, dass** die Stirnfläche (26) des einen lichtleitenden Elementes (18) sphärisch konkav und die Stirnfläche (26') des anderen lichtleitenden Elementes (18) mit gleichem Krümmungsradius sphärisch konvex ausgebildet ist.

2. Lichtleiterkupplung nach Anspruch 1, **dadurch gekennzeichnet, dass** die lichtleitenden Elemente (18) jeweils aus einer lichtundurchlässigen Hülse (22) und einem darin aufgenommenen transparenten Kern (24) bestehen.

3. Lichtleiterkupplung nach Anspruch 2, **dadurch gekennzeichnet, dass** die Wanddicke der Hülse (22) im Bereich der Stirnfläche (26, 26') mindestens 1/10, vorzugsweise mindestens 1/5 des Krümmungsradius der Stirnflächen (26, 26') beträgt.

4. Lichtleiterkupplung nach einem der vorhergehenden Ansprüche, **dadurch gekennzeichnet, dass** das erste Kupplungsteil (10) eine Sendeeinrichtung (38) beinhaltet, die aus elektrischen Signalen optische Signale erzeugt und diese in das lichtleitende Element (18) des ersten Kupplungsteiles (10) einspeist.

5. Lichtleiterkupplung nach Anspruch 4, **dadurch gekennzeichnet, dass** die Sendeeinrichtung (38) mindestens eine LED (66) zur Erzeugung der optischen Signale hat.

6. Lichtleiterkupplung nach Anspruch 4 oder 5, **dadurch gekennzeichnet, dass** das erste Kupplungsteil (10) einen Mikroprozessor beinhaltet, der die elektrischen Signale für die Sendeeinrichtung (38) bereitstellt.

7. Lichtleiterkupplung nach einem der vorhergehenden Ansprüche, **dadurch gekennzeichnet, dass** das zweite Kupplungsteil (12) eine Empfangseinrichtung (40) beinhaltet, die aus auf das lichtleitende Element (18) des zweiten Kupplungsteiles (12) übertragenen optischen Signalen elektrische Signale erzeugt.

8. Lichtleiterkupplung nach Anspruch 7, **dadurch gekennzeichnet, dass** die Empfangseinrichtung (40) eine Photodiode (68) zum Detektieren der optischen Signale hat.

9. Lichtleiterkupplung nach Anspruch 7 oder 8, **dadurch gekennzeichnet, dass** das zweite Kupplungsteil (12) einen Mikroprozessor beinhaltet, der das in der Empfangsvorrichtung (40) erzeugte elektrische Signal verarbeitet.

10. Lichtleiterkupplung nach Anspruch 6 und 9, **dadurch gekennzeichnet, dass** der Mikroprozessor des ersten Kupplungsteiles programmiert ist, um mehrere individuelle Signale in elektrischen Multiplexsignalen zu vereinen, und der Mikroprozessor des zweiten Kupplungsteiles programmiert ist, um elektrische Multiplexsignale in individuelle Signale zu zerlegen.

11. Lichtleiterkupplung nach einem der Ansprüche 4 bis 6 und/oder einem der Ansprüche 7 bis 9, **dadurch gekennzeichnet, dass** das erste und/oder zweite Kupplungsteil (10, 12) ein Gehäuse (14) hat, an dessen einem axialen Ende ein hülsenartiger Abschnitt (16) ausgebildet ist, in dem das lichtleitende Element (18) axial verschiebbar gelagert und in Richtung auf dieses eine axiale Ende elastisch vorgespannt ist, und an dessen anderem Ende ein Anschlussbolzen (46) ausgebildet ist, der zum Einsetzen in einen Kontaktträger (78, 80) bestimmt ist.

12. Lichtleiterkupplung nach Anspruch 11, **dadurch gekennzeichnet, dass** der Anschlussbolzen (46) aus zwei gegeneinander isolierten Abschnitten (48, 50) besteht, von denen der eine mit dem Massepotential und der andere mit einer elektrischen Signalleitung verbunden ist, wenn der Anschlussbolzen (46) in den Kontaktträger (78, 80) eingesetzt ist.

## Claims

1. Light conductor coupling, particularly for transmitting optical signals between vehicle components coupled to each other, having a first and a second coupling part (10, 12) which are designed to be coupled to each other and in which a light-conducting element (18) is held in each case, of which at least one is elastically pre-stressed in such a way that the light-conducting elements (18) are pushed against each other with their end faces (26, 26') if the coupling parts (10, 12) are coupled to each other in order to allow light transmission from one light-conducting element (18) to the other, **characterised in that** the end face (26) of one light-conducting element (18) is spherically concave and the end face (26') of the other light-conducting element (18) is spherically convex with the same radius of curvature.

2. Light conductor coupling according to claim 1, **characterised in that** the light-conducting elements (18) consist in each case of a non-transparent sleeve (22) and a transparent core (24) received by same.

3. Light conductor coupling according to claim 2, **characterised in that** the wall thickness of the sleeve (22) in the region of the end face (26, 26') is at least 1/10, preferably at least 1/5, of the radius of curvature of the end faces (26, 26').

4. Light conductor coupling according to one of the preceding claims, **characterised in that** the first coupling part (10) contains a sending device (38) which generates optical signals from electrical signals and feeds said optical signals into the light-conducting element (18) of the first coupling part (10).

5. Light conductor coupling according to claim 4, **characterised in that** the sending device (38) has at least an LED (66) for generating the optical signals.

6. Light conductor coupling according to claim 4 or 5, **characterised in that** the first coupling part (10) contains a microprocessor which provides the electrical signals for the sending device (38).

7. Light conductor coupling according to one of the preceding claims, **characterised in that** the second coupling part (12) contains a receiving device (40) which generates electrical signals from optical signals transmitted to the light-conducting element (18) of the second coupling part (12).

8. Light conductor coupling according to claim 7, **characterised in that** the receiving device (40) has a photodiode (68) for detecting the optical signals.

9. Light conductor coupling according to claim 7 or 8, **characterised in that** the second coupling part (12) contains a microprocessor which processes the electrical signal generated in the receiving device (40).

10. Light conductor coupling according to claim 6 and 9, **characterised in that** the microprocessor of the first coupling part is programmed to bring together several individual signals into electrical multiplex signals and the microprocessor of the second coupling part is programmed to break down electrical multiplex signals into individual signals.

11. Light conductor coupling according to one of the claims 4 to 6 and / or one of the claims 7 to 9, **characterised in that** the first and / or second coupling part (10, 12) has a housing (14), on one axial end of which a sleeve-like section (16) is constructed, in which the light-conducting element (18) is arranged in an axially displaceable way and is elastically pre-stressed in the direction of this one axial end, and on the other end of which a connecting pin (46) is constructed which is designed to be inserted into a contact carrier (78, 80).

12. Light conductor coupling according to claim 11, **characterised in that** the connecting pin (46) consists of two sections (48, 50) insulated against each other, of which one is connected to the earth potential and the other to the electrical signal line if the connecting pin (46) is inserted into the contact carrier (78, 80).

## Revendications

1. Connecteur de fibres optiques, en particulier pour la transmission de signaux optiques entre des pièces de véhicule automobile couplées entre elles, ledit connecteur comportant des première et deuxième pièces de couplage (10, 12) qui peuvent être couplées entre elles et qui comportent chacune un élément conducteur de lumière (18), au moins un des éléments conducteurs de lumière (18) étant précontraint élastiquement de telle sorte que les éléments conducteurs de lumière (18) sont pressés l'un contre l'autre au niveau de leurs faces frontales (26, 26') lorsque les pièces de couplage (10, 12) sont couplées entre elles pour permettre une transmission optique d'un élément conducteur de lumière (18) à l'autre, **caractérisé en ce que** la face frontale (26) dé l'un des éléments conducteurs de lumière (18) présente une conformation sphérique concave, tandis que la surface frontale (26) de l'autre élément conducteur de lumière (18) présente une conformation sphérique convexe de même rayon de courbure.

2. Connecteur de fibres optiques selon la revendication 1, **caractérisé en ce que** les éléments conducteurs de lumière (18) sont chacun constitués d'un manchon opaque à la lumière (22) dans lequel est reçu un noyau transparent (24).

3. Connecteur de fibres optiques selon la revendication 2, **caractérisé en ce que** l'épaisseur de paroi du manchon (22) au niveau de la face frontale (26, 26') est égale à au moins 1/10, avantageusement au moins 1/5, du rayon de courbure des faces frontales (26, 26').

4. Connecteur de fibres optiques selon l'une des revendications précédentes, **caractérisé en ce que** la première pièce de couplage (10) contient un dispositif d'émission (38) qui génère à partir de signaux électriques des signaux optiques qu'il injecte dans l'élément conducteur, de lumière (18) de la première pièce de couplage (10).

5. Connecteur de fibres optiques selon la revendication 4, **caractérisé en ce que** le dispositif d'émission (38) comporte au moins une LED (66) destinée à générer des signaux optiques.

6. Connecteur de fibres optiques selon la revendication 4 ou 5, **caractérisé en ce que** la première pièce de couplage (10) contient un microprocesseur qui délivre les signaux électriques au dispositif d'émission (38).

7. Connecteur de fibres optiques selon l'une des revendications précédentes, **caractérisé en ce que** la deuxième pièce de couplage (12) contient un dispositif de réception (40) qui génère des signaux électriques à partir de signaux optiques transmis à l'élément conducteur de lumière (18) de la deuxième pièce de couplage (12).

8. Connecteur de fibres optiques selon la revendication 7, **caractérisé en ce que** le dispositif de réception (40) comporte une photodiode (68) destinée à détecter les signaux optiques.

9. Connecteur de fibres optiques selon la revendication 7 ou 8, **caractérisé en ce que** la deuxième pièce de couplage (12) contient un microprocesseur qui traite le signal électrique généré dans le dispositif de réception (40).

10. Connecteur de fibres optiques selon les revendications 6 et 9, **caractérisé en ce que** le microprocesseur de la première pièce de couplage est programmé pour réunir plusieurs signaux individuels en signaux électriques multiplexés, et **en ce que** le microprocesseur de la deuxième pièce de couplage est programmé pour séparer des signaux électriques multiplexes en signaux individuels.

11. Connecteur de fibres optiques selon l'une des revendications 4 à 6 et/ou l'une des revendications 7 à 9, **caractérisé en ce que** la première pièce de couplage (10) et/ou la deuxième pièce de couplage (12) comportent un boîtier (14), à l'une des extrémités axiales dudit boîtier étant conformée une portion (16) de type manchon dans laquelle l'élément conducteur de lumière (18) est monté de façon à être mobile axialement et est précontraint élastiquement en direction de cette extrémité axiale, et à l'autre extrémité axiale dudit boîtier étant conformé un boulon d'assemblage (46) qui est destiné à être inséré dans un support de contacts (78, 80).

12. Connecteur de fibres optiques selon la revendication 11, **caractérisé en ce que** le boulon d'assemblage (46) est constitué de deux portions (48, 50) isolées l'une de l'autre, l'une des portions étant reliée au potentiel de masse et l'autre des portions étant reliée à une ligne de signal électrique lorsque le boulon d'assemblage (46) est inséré dans le support de contacts (78, 80).
